# EUROPÄISCHE PATENTSCHRIFT

(11) **EP 2 525 476 B1**
(45) Veröffentlichungstag und Bekanntmachung des Hinweises auf die Patenterteilung: **13.02.2019**
(21) Anmeldenummer: 12168394.0
(22) Anmeldetag: 16.05.2012
(51) Int. Cl.: H02K 5/24, B63H 21/30

(54) **Isolatorsystem zur Körperschallentkopplung für eine große elektrische Maschine**
Insulator system to decoupling of the impact sound for a big electric machine
Système d'isolateur à l'découplage du bruit d'impact pour une grande machine électrique

(30) Priorität: 18.05.2011 DE 102011050470; 16.05.2012 DE 102012104292
(43) Veröffentlichungstag der Anmeldung: 21.11.2012
(73) Patentinhaber: VEM Sachsenwerk GmbH, 01257 Dresden (DE)
(72) Erfinder: Dr.-Ing. Gündel, Andreas, 01309 Dresden (DE); Philipps, Frank, 01731 Kreischa (DE); Koehler, Ulrich, 01279 Dresden (DE)
(74) Vertreter: Weissfloh, Ingo

(56) Entgegenhaltungen:
- DE-B- 1 057 214
- DE-B- 1 204 313
- US-A- 2 456 612

## Beschreibung

Die Erfindung betrifft ein Isolatorsystem zur Körperschallentkopplung für eine große elektrische Maschine für unterschiedliche Einsatzorte, wie auch beispielsweise auf Schiffen mittels schwingungsisolierenden Elementen zwischen Maschinengehäuse und Grundrahmen.

Im Schiffsbau, besonders bei modernen Kreuzfahrtschiffen, werden zunehmend Kombinationen aus großen Elektromotoren und entsprechend leistungsfähigen Umrichtern eingesetzt um Schiffsschrauben drehzahlgeregelt anzutreiben. Die eingesetzten elektrischen Maschinen erreichen typischerweise Leistungen zwischen 5 MW und 25 MW. Solche umrichtergespeisten elektrischen Maschinen verursachen teils erhebliche dynamische Kräfte an den Maschinen durch sogenannte Momentenpendelungen oder andere magnetische Luftspaltanregungen. Die magnetischen Anregungen der elektrischen Maschinen liegen dabei in der Regel im Bereich zwischen etwa 120 Hz bis 1 kHz. Damit die hörbaren Anteile als Körperschall nicht über die Schiffsstruktur in die Kabinen der Passagiere gelangen, müssen die elektrischen Maschinen elastisch auf den zugehörigen Fundamenten im Schiffsrumpf aufgestellt werden.

Elastische Aufstellungen sind allgemeiner Stand der Technik, wobei frühere Lösungen hauptsächlich zum Schutz des Gehäuses vor hohen mechanischen Beanspruchungen, wie sie beispielsweise beim Einphasengenerator auftreten, angewendet worden sind. Der Schutz vor niederfrequenten Schwingungen (typisch <50 Hz) erfordert wesentlich weichere Federelemente als sie zur Filterung von Körperschall (ab 120 Hz - 1 kHz) notwendig sind.

Bisher zum Einsatz kommen hauptsächlich Körperschallentkopplungen auf Basis von Gummielementen, federelastischen Kunststoffelementen oder Blattfederlösungen die zwischen Statorgehäuse und Tragrahmen angeordnet sind. Für kleinere elektrische Maschinen in verschiedenen Anwendungsbereichen sind auch andere technische Lösungen bekannt, wo Schraubenfedern zum Einsatz gelangen. Besonders die Körperschallentkopplung mittels speziell angeordneten Blattfederlösungen ist hinsichtlich ihrer Nachgiebigkeit durch hohe mechanische Belastungen in der Regel nur für eng begrenzte Steifigkeiten bezogen auf möglichst kleine Einbauräume einsetzbar. Die konstruktive Ausführung größerer Nachgiebigkeiten sind zwar auch möglich, führen dann aber zu einem wesentlich vergrößerten Einbauraum. So ist es aus der DE 196 33 421 A1 eine technische Lösung bekannt, bei der sich die Statorfüße und Rotorlager einer großen elektrischen Maschine getrennt voneinander auf einem Fundamentrahmen abstützen. Dabei ist jeder Fuß des Stators unter Zwischenschaltung eines elastisch federnden Elementes abgestützt, welches aus mindestens zwei sich parallel zur Statorachse mit Abstand zueinander erstreckenden massiven Federplatten besteht. Diese massiven Federplatten sind voneinander durch massive Distanzstücke beabstandet. Die Federplatten sind ihrerseits wiederum mit dem Statorgehäuse mittels massiver Distanzstücke und mit dem Fundamentrahmen ebenfalls mittels weiterer starrer Distanzelemente verbunden. Hier ist dabei eine Art Wellenfedersystem aufgebaut mit dem der Körperschall entkoppelt werden soll.

Aus der DE 1 112 571 A1 ist eine andere Anordnung zur Körperschallentkopplung bei elektrischen Maschinen großer Leistung bekannt, wo über nur in horizontaler Richtung zur Maschinenlängsachse schwingende Federelemente das Problem gelöst werden soll. Hier ist eine durchgehende elastische Ankopplung des Maschinengehäuses realisiert und das Maschinengehäuse ist mittels speziellen Federelementen mit dem Maschinenfundament verbunden. Als Federelement ist hier bevorzugt ein Doppel-T-Träger eingesetzt, welcher aber nur einen geringen Steifigkeitsbereich umfasst und nur relativ steif ausgebildet werden kann.

Gleichfalls voll elastische Körper oder anderweitige elastische Lagerelemente zur Schwingungsisolierung sind aus der DE 38 27 240 A1 bekannt. Zwar ist hier eine technische Lösung für Getriebe beschrieben, welche aber durchaus auch für elektrische Maschinen geeignet ist. Dabei sind ebenfalls voll elastische Körper als Federelemente eingesetzt, wobei die Längenänderungen der elastischen Körper über zusätzlich wieder zwischengeschaltete hydrostatische Distanzausgleichsvorrichtungen kompensiert werden sollen. Diese Dämpfungs- und Positioniereinrichtung ist allerdings konstruktiv und technologisch aufwändig.

In der DE 896 223 B ist eine rotierende elektrische Maschine beschrieben, bei der mittels einer zusätzlich im Inneren des Maschinengehäuses angeordneten Federung die Übertragung tangentialer mechanische Erschütterungen während des Betriebes der Maschine auf das Außengehäuse und das Fundament zuverlässig verhindert werden soll. Hier geht es um eine optimale Anordnung von Federelementen im Inneren des Maschinengehäuses um die tangentialen Erschütterungen zuerst auf das Außengehäuse und dann später auf das Fundament zu vermeiden.

Bekannt ist aus der DE 1 057 214 B eine federnde Aufstellung einer elektrischen Maschine um Drehmomentpulsationen bei Einphasen-Generatoren in das Maschinengehäuse einleiten zu können. In dieser technischen Lösung werden allerdings nur rein mechanische Schwingungen über direkt in das Maschinengehäuse integrierte Federstützen oder Federsäulen auf einen Fundamentrahmen übertragen. Für diese Aufgabe ist auch der mögliche Einsatz von Tellerfedern vorgesehen um eine wesentliche Entlastung des Maschinengehäuses von mechanischen Schwingungsbelastungen, wie sie insbesondere bei Stoßkurzschlussströmen auftreten, zu erzielen. Ein Austausch dieser Federn ist allerdings nur unter erhebliche Aufwendungen möglich.

Des weiteren ist aus der AT 163 563 B eine andere federnde Abstützung für Einphasenmaschinen aufgezeigt, bei der die Wirkung der pulsierenden Drehmomente auf das Fundament verhindert werden soll. Die in dieser Lösung angeordneten Federn sind hier außen am Gehäuse angeordnet, liegen aber zwischen zusätzlich relativ weit auskragenden Gehäusewangen und sollen mittelsgeeigneter Abdeckbleche zusätzlich gekapselt werden. In erster Linie geht es hierbei um eine möglichst einfache Montage und Positionierung der beiden Gehäusehälften des Maschinengehäuses und die Vermeidung von rein mechanischen Schwingungen auf das Maschinenfundament.

Aus der DE 39 38.141 A1 ist eine andere Vorrichtung zur schwingungsisolierenden Lagerung zwar für Verbrennungsmotoren bekannt, die für den rauen Schiffsbetrieb ausgelegt ist. Diese technische Lösung, welche durchaus auch für elektrische Großmaschinen einsetzbar wäre, ist konstruktiv wiederum mit voll elastischen Lagerelementen ausgebildet. Zusätzlich zu den elastischen Lagerelementen ist eine Anschlageinrichtung für die Aufnahme von vertikalen und horizontalen Bewegungen angeordnet, welche zwischen feststehenden Anschlägen mit einem definierten Bewegungsabstand angeordnete Halteelemente umfasst, die die Kräfte bei großen Roll- und Stampfbewegungen des Schiffes ableiten soll.

Aus der DE 1 204 313 ist eine Anordnung zur federnden Abstützung und Führung von Wechselstromgeneratoren bekannt, wobei sich der Gehäuserahmen über Isolatormodule auf einem Fundamentrahmen elastisch abstützt und wobei jedes Isolatormodul aus einer Parallelanordnung einer harten Tellerfeder und einer weichen Vorspannschraubenfeder besteht.

Der Erfindung liegt die Aufgabe zu Grunde ein optimiertes Isolatorsystem zur Körperschallentkopplung für große elektrische Maschinen für unterschiedliche Einsatzorte aber in erster Linie für den Einsatz auf Schiffen mittels schwingungsisolierenden Elementen zwischen Maschinengehäuse und Grundrahmen zu schaffen, dass sich beliebig an unterschiedlich große Maschinentypen anpassen lässt, konstruktiv einfach und universell aufgebaut ist, als universeller Nachrüstsatz verfügbar ist und problemlos bei laufendem Maschinenbetrieb nachgerüstet, neu justiert, repariert oder ausgetauscht werden kann.

Die Aufgabe wird erfindungsgemäß mit den Merkmalen des Oberbegriffs und des kennzeichnenden Teils des ersten Patentanspruches gelöst. Weitere vorteilhafte Ausgestaltungen sind in den Unteransprüchen beschrieben. Das erfindungsgemäße Isolatorsystem zur Körperschallentkopplung für eine große elektrische Maschine 1 (größer 500 KW bis 30 MW Leistung) ist für unterschiedliche Einsatzorte geeignet, wobei die Körperschallentkopplung zwar, wie an sich bekannt, mittels schwingungsdämpfenden Elementen zwischen Maschinengehäuse 11 und Grundrahmen 2 erfolgt, aber der Unterschied darin besteht, dass hier erstmals ein neuartiges Isolatorsystem 3, welches besonders ausgeführte Isolatormodule 10 enthält, eingesetzt wird. Diese Isolatormodule 10 sind jeweils aus einer Parallelanordnung von harten Tellerfedern 6 sowie weichen Vorspannschraubenfedern 24 konstruktiv ausgeführt. Dabei sind am Maschinengehäuse 11 ein gesonderter Gehäuserahmen oder mehrere Gehäuseelemente 12 angeordnet. Dieser gesonderte Gehäuserahmen oder die Gehäuseelemente 12 stützen sich elastisch über mindestens ein Isolatormodul 10 pro Maschinenlängsseite auf einem Fundamentrahmen 2 ab. Am Gehäuserahmen oder den Gehäuseelementen 12 sind ein oder mehrere Hebel 8 angelenkt. Diese Hebel 8 sind direkt am Fundamentrahmen 2 befestigt und stützen sich am Gehäuserahmen oder den Gehäuseelementen 12 und optional an Fundamentrahmen 2 ab. An den Querseiten sind als Axialsicherung Fangkäfige 9 zwischen Maschinengehäuse 11 und Fundamentrahmen 2 angeordnet. Zur Kompensation drehmomentenbedingter Rückstellkräfte, welche im Extremfall im Betrieb den zugseitigen Motorfuß bei bestimmten Belastungen ausheben können, ziehen weiche Vorspannschraubenfedern 24 den Motorfuß zusätzlich in Richtung Fundamentrahmen 2. Die Parallelschaltung einer steifen Tellerfeder 6 mit einer weichen Vorspannschraubenfeder 24 ist aufgrund der Kombination ihrer Wirkungen in der Lage den Körperschall besonders wirksam zu reduzieren bzw. dessen Übertragung auf den Fundamentrahmen 2 ganz zu verhindern. Die harte Tellerfeder 6 dominiert die Entkopplungssteifigkeit, die weiche Vorspannschraubenfeder 24 die zusätzlich auftretenden vertikalen Zugkräfte.

Besonders vorteilhaft und konstruktiv einfach sind die Isolatormodule 10 für eine große elektrische Maschine 1 ausführbar, wenn das Isolatormodul 10 aus einer Oberschale 4 einer oder mehreren zwischenliegenden harten Tellerfedern 6 mit Parallelanordnung einer weichen Vorspannschraubenfeder 24 und einer Unterschale 5 ausgebildet ist. Dabei ist die Oberschale 4 mit einem Gehäuselängsträger 14 des Maschinengehäuses 11 mittels einer oder mehrerer Schrauben-Oberschale 7b und die Unterschale 5 mit einem Grundrahmenoberträger 17 mittels einer oder mehrerer Schrauben-Unterschale 7a befestigt. Aber auch eine andere Befestigung der harten Tellerfedern 6, z. B. mit entsprechend dimensionierten Stehbolzen ist hier einsetzbar. In die Oberschale 4 ist ein Vorspannschraubenfederbolzen 25 eingebracht, der durch ein Durchgangsloch in der Unterschale 5 und im Grundrahmenoberträger eingeschraubt wird. Auf dem Vorspannschraubenfederbolzen 25 ist eine weiche Vorspannschraubenfeder 24 aufgebracht, die sich über eine Unterlegscheibe am Grundrahmenoberträger abstützt und deren Vorspannkraft über eine Vorspannschraubenfedermutter 26 am unteren Ende des Vorspannschraubenfederbolzens eingestellt wird.

In einer speziellen Weiterbildung der Anordnung zur Körperschallentkopplung sind im Isolationsmodul 10 mehrere gleich große oder auch unterschiedlich große harte Tellerfedern 6 in Reihe oder parallel gestapelt oder verteilt in Parallelanordnung mit einer Vorspannschraubenfeder 24 angeordnet. Durch entsprechende Kombination oder Auswahl von harten Tellerfedern 6 können Resonanzfrequenzen beim Betrieb der elektrischen Maschine und des Antriebssystems besser als bisher angepasst werden. Sollte trotzt genauer Berechnungen erst nach dem Einbau der großen elektrischen Maschine 1 in ein Antriebsystem und nach dessen Inbetriebnahme trotzdem noch störender Körperschall in bestimmten Frequenzbereichen auftreten und messtechnisch ermittelt worden sein, kann durch einfachen Austausch der harten Tellerfedern 6, oder deren Neueinstellung diese Störung nachträglich ohne großen Aufwand beseitigt werden. Zur Aufnahme und Ableitung von Querkräften sind an der großen elektrischen Maschine 1 Fangkäfige 9 am Maschinengehäuse 11 mittels Fangeisen 15 geführt. Zwischen den bevorzugt vier an den Axialseiten des Maschinengehäuses 11 angeordneten Fangeisen 15 und den zugehörigen vier Fangkäfigen 9 sind zur besseren Körperschallentkopplung zusätzliche Fangeiseneinlagefedern 19 angeordnet.

Zur besseren Justierung ist es vorteilhaft, wenn bei der Anordnung zur Körperschallentkopplung die Fangkäfige 9 mittels einer zusätzlichen einteiligen oder mehrteiligen Fangkäfigplatte 20 auf dem Fundamentrahmen 2 angeordnet sind. Diese Fangkäfigplatte oder Fangkäfigplatten 20 sind direkt auf der Oberfläche des Fundamentrahmenoberträgers 17 angeordnet und befestigt.

Von erheblichem Vorteil ist es des weiteren, wenn der bzw. die neuartigen Hebel 8 bei der Anordnung zur Körperschallentkopplung für eine große elektrische Maschine 1 so ausgebildet und angelenkt sind, dass vorrangig nur Querkräfte übertragen und abgeführt werden. Dadurch kann sich sowohl in Längs- als auch in Vertikalrichtung keinerlei Körperschallbrücke ausbilden.

Das erfindungsgemäße Isolatorsystem 3 zur Körperschallentkopplung ermöglicht eine sehr hohe mechanische Belastbarkeit der schwingungsisolierenden Elemente und führt zu geringen Einbauhöhen des Systems und der gesamten elektrischen Maschine, was insbesondere bei den sehr engen Platzverhältnissen in Schiffsrümpfen aber auch an anderen Einsatzorten, wo der Körperschall zunehmend als störend empfunden wird, von wesentlichem Vorteil ist. Zudem bietet diese technische Lösung des Isolatorsystems 3 eine große Flexibilität bei der Wahl von unterschiedlichen Federsteifigkeiten und ermöglicht zudem die Ausbildung weit größerer Steifigkeitsbereiche, als es beispielsweise ein reines Blattfedersystem bietet. Der modulare Aufbau des gesamten Isolatorsystems 3 lässt problemlos Anpassungen an verschieden groß dimensionierte und schwere elektrische Maschinen in einem sehr großen Leistungsbereich zwischen 500 KW und 30 MW zu. Zudem können auch nachträglich Veränderungen direkt am Einsatzort ohne Demontage der Maschine vom Fundamentrahmen 2 oder beispielsweise an Bord fahrender Schiffe ohne Demontage von der Schiffsstruktur ohne erheblichen Aufwand ausgeführt werden. Selbst bei mechanischem Totalausfall des erfindungsgemäßen Isolatorsystems 3, z. B. durch längere Überlastung oder Ermüdung (Federbruch) einzelner harter Tellerfedern 6 oder weicher Vorspannschraubenfedern 24, kann die elektrische Maschine 1 weiterhin gefahrlos betrieben werden. Ein anderer erheblicher Vorteil besteht auch darin, dass einzelne beschädigte Tellerfedern 6 gegebenenfalls bei laufendem Volllastbetrieb ausgetauscht werden können. Mit dem erfindungsgemäßen Isolatorsystem 3 ist es möglich resonanzempfindliche kritische Drehzahlen bzw. Arbeitspunkte bei großen elektrischen Maschinen in erster Linie bei Passagierschiffen wirksam zu verschieben bzw. zu vermeiden. Somit kann der Körperschall, der nicht nur von den Passagieren und Besatzungen von Schiffen als sehr störend empfunden wird, sondern der auch zur Materialermüdung besonders belasteter Verbindung im gesamten Schiffskörper führen kann, gänzlich vermieden oder zumindest sehr stark verringert werden.

Die Erfindung soll nachstehend in einem Ausführungsbeispiel an Hand der vier Figuren näher erläutert werden. Das nachstehend beschriebene Ausführungsbeispiel bezieht sich auf eine Stehlagermaschine einer großen elektrischen Maschine mit seitlich hochgezogenen Füßen. Die Lösung ist prinzipiell auch für sogenannte Gehäuselagermaschinen anwendbar oder jeweils auch für anders gestaltete Fußanordnungen geeignet.
- Fig. 1: zeigt eine Seitenansicht einer elektrischen Maschine 1 mit einem Isolatorsystem 3 mit vier Isolatormodulen 10 auf einer Seite, wobei in jedem Isolatormodul zwei harte Tellerfedern 6 mit je zwei weichen Vorspannschraubenfedern 24 nebeneinander angeordnet sind
- Fig. 2: zeigt ein vergrößertes Detail der Seitenansicht einer Maschinenecke mit einem Fangeisen 9 zur Aufnahme axialer und vertikaler Kräfte

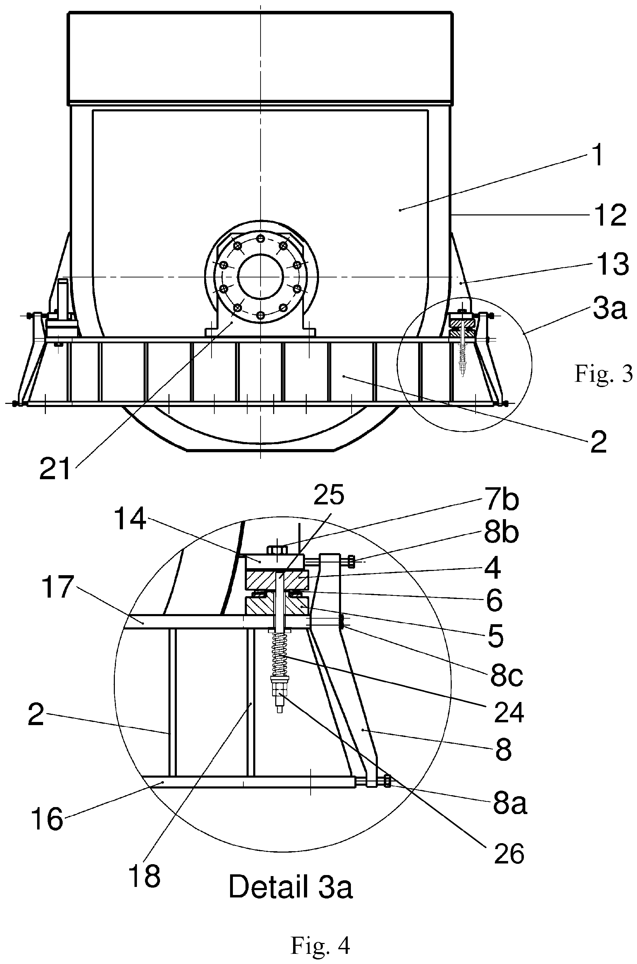

- Fig. 3: zeigt eine Axialansicht auf die Kupplungsseite einer erfindungsgemäßen elektrischen Maschine 1, (hier ist allerdings nur auf einer Seite der Fangkäfig 9 mit dem Fangeisen 15 gezeichnet um nicht das Isolatormodul 10 in dieser Ansicht zu verdecken
- Fig. 4: zeigt ein vergrößertes Detail der Axialansicht einer Maschinenecke

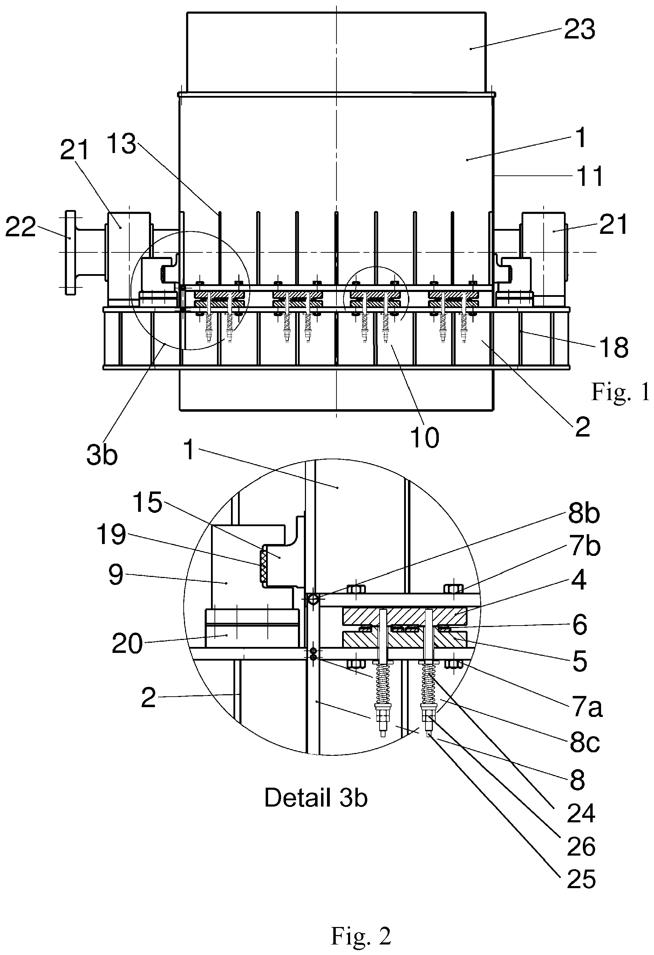

Aus Figur 1 ist ersichtlich, wie zwischen dem Maschinengehäuse 11 der elektrischen Maschine 1 und dem Fundamentrahmen 2 das Isolatorsystem 3 zur Körperschallentkopplung angeordnet ist. Hier ist eine Ausführung des erfindungsgemäßen Isolatorsystems gezeigt, wo vier Isolatormodule 10 entlang jeder Längsseite der elektrischen Maschine 1 angeordnet sind. Generell ist es aber auch möglich nur ein Isolatormodul pro Maschinenlängsseite anzuordnen, wobei dann die Konstruktion sich entsprechend lang entlang der Längsseite erstreckt, oder gegebenenfalls noch eine weit größere Zahl von Isolatormodulen10 pro Längsseite der elektrischen Maschine 1 anzuordnen. Sinnvollerweise sind in der Regel pro Maschinenlängsseite die gleiche Anzahl von Isolatormodulen 10 symmetrisch verteilt angeordnet. Die Konstruktion des neuartigen Isolatorsystems 3 muss sowohl angreifende Drehmomente, als auch erhebliche Längs- und Querkräfte zwischen dem Maschinengehäuse 11 und dem Fundamentrahmen 2 übertragen, aber zugleich den anliegenden Körperschall, der aus dem Stator der elektrischen Maschine 1 kommt, wirksam entkoppeln. Das System der Isolatoren ist insgesamt modular aufgebaut, wobei jedes Isolatormodul 10 mindestens aus einer Oberschale 4, die mit der elektrischen Maschine 1 über einen durchgehend ausgebildeten Gehäuserahmen 12 über je zwei Schrauben-Oberschale 7b verbunden ist, sowie einer Unterschale 5, die mittels zwei Schrauben-Unterschale 7a mit dem durchgehend ausgebildeten Fundamentrahmen 2 verbunden sind, besteht. Hier übertragen zwei einzeln nebeneinander in Reihe angeordnete harte Tellerfedern 6 die vertikalen Kräfte zwischen Oberschale 4 und Unterschale 5. Es sind aber auch Kombination aus mehreren parallel oder in Reihe angeordneten harten Tellerfedern 6 ausführbar. In Parallelanordnung mit den harten Tellerfedern 6 sind weiche Vorspannschraubenfedern 24 baulich vereinigt zu einem neuartigen Isolatormodul 3. Die Vorspannschraubenfeder 24 ist auf einem Vorspannschraubenfederbolzen 25 geführt, wobei dieser mit der Oberschale 4 verbunden ist und durch die Unterschale 5 und den Grundrahmenoberträger hindurchragt und über diesen hinausragt. Zwischen Grundrahmenoberträger und Vorspannschraubenmutter 26 ist die Vorspannschraubenfeder 24 auf dem Vorspannschraubenfederbolzen 25 geführt. Beim Vorspannen drückt die Vorspannschraubenfeder 24 über eine Unterlegscheibe gegen den Grundrahmenoberträger und übt auf die Oberschale eine erforderliche Vorspannung in Richtung des Grundrahmens aus so dass diese in Richtung des Grundrahmens gezogen wird. Diese weichen Vorspannschraubenfedern 24 sorgen unter Drehmomentbelastung für ausreichend Last um eine Ausheben des zugseitigen Gehäuselängsträgers 14 zu verhindern.

Die vertikal aufzunehmenden Kräfte resultieren aus dem Eigengewicht des Ständers der elektrischen Maschine 1, bestehend aus dem Blechpaket mit der eingebrachten Wicklung, dem Motorgehäuse gegebenenfalls mit angeordneten Kühler, sowie den jeweils zu übertragenden Momenten. Innerhalb der einzelnen Isolationsmodule 10 können die harten Tellerfedern 6 nebeneinander oder auch übereinander gestapelt angeordnet werden um die jeweils gewünschten Steifigkeiten des Isolatorsystems 3 zu erreichen. Der Rotor der großen elektrischen Maschine ist über die Rotorwelle und die Maschinenlager getrennt und körperschallentkoppelt über die Lager mit dem Fundamentrahmen 2 verbunden. Es ist aber auch eine Anordnung und Befestigung einer großen elektrischen Maschine 1 in der Art möglich, dass anstelle eines durchgehenden Fundamentrahmens 2 der Fundamentrahmen in einzelne Fundamentrahmenteile geteilt ausgeführt ist, welche wiederum dann körperschallentkoppelt voneinander angeordnet und befestigt sind. Auch hier können die erfindungsgemäßen Isolatormodule 10 mit den harten Tellerfedern 6 und weichen Vorspanschraubenfedern 24 eingesetzt werden.

Zur Übertragung und Ableitung der Querkräfte ist pro Isolationsmodul 10 ein außen liegender Hebel 8 angeordnet. Es können aber auch mehrere Hebel 8 pro Isolatormodul 10 angeordnet werden. Dieser Hebel 8, bzw. diese Hebel 8 sind am Fundamentrahmenoberträger 17 des Fundamentrahmens 2 in einer definierten Position fest oder lösbar befestigt. Bevorzug ist bzw. sind die Hebel 8 fest verschraubt, es ist aber auch eine Lösung möglich, wo der Hebel 8 in zusätzlich angeordnete Ösen oder gesondert ausgebildete Laschen einhängbar ausgebildet sind. Allein über Flächenpressung werden mittels der Hebelanpressbolzen-Fundamentrahmen 8a und der Hebelanpressbolzen-Gehäuserahmen 8b die auftretenden Querkräfte zwischen dem Maschinengehäuse 11 der elektrischer Maschine 1 und dem Fundamentrahmen 2 übertragen, ohne dass dabei eine Körperschallbrücke ausgebildet ist bzw. sich ausbilden kann. Diese Flächenpressung kann sowohl mittels vorgespannter elastischer Elemente, aber auch spielfrei starr eingebracht werden. Außer in Querrichtung übertragen diese Elemente keine, oder nur sehr geringe anders gerichtete Kräfte. Die dargestellte Anordnung und Ausführung der Hebel 8 bezieht sich auf eine Art Dreipunktanbindung. Es sind erfindungsgemäß aber auch Anordnungen zur Anbindung in Zweipunktausführung, Vierpunktausführung oder anderweitige Mehrpunktausführungen möglich, wobei die Hebel 8 verschiedenartig konstruktiv ausgeführt sein können. So würde zum Beispiel bei einer Zweipunktanbindung auf die Hebelanpressbolzen-Fundamentrahmen 8a verzichtet werden können. Anstelle mehrerer einzelner getrennter Hebel 8 kann deren Funktion auch durch ein einteiliges profiliertes Konstruktionselement übernommen werden, welches die gleiche Wirkung wie das System der einzelnen Hebel 8 erzielt.

Die teilweise erheblichen Längskräfte, wie sie beispielsweise beim Stampfen von Schiffen auftreten, werden durch vier am Maschinengehäuse 11 angebrachte Fangeisen 15, welche in vier Fangkörben 9 geführt sind aufgenommen. Diese Fangeisen 12 sind in vertikaler Richtung mit einem bestimmten Spiel versehen. In axialer Richtung sind die Fangeisen 15 über elastische Federelemente, wie z. B. Fangeiseneinlagefedern 19 von dem Fangkäfig 9 geführt und gesichert, wobei die Fangkäfige 9 ihrerseits am Grundrahmen 2 fest angebracht sind. Die Fangeisen 15 leiten auch die möglichen erheblichen Kräfte in die Fangkäfige 9 ein, welche im Falle eines Kurzschlusses auftreten können. Die vorstehend beschriebene Anordnung ist bevorzugt für den Einsatz auf Schiffen geeignet, wo besonders hohe Anforderungen an eine dauerhaft stetig und umfassende Körperschallentkopplung während des Betriebes der großen elektrischen Maschine 1 gestellt werden.

### Bezugszeichenliste

- 1: elektrische Maschine
- 2: Fundamentrahmen
- 3: Isolatorsystem
- 4: Oberschale
- 5: Unterschale
- 6: Tellerfedern
- 7a: Schrauben Unterschale
- 7b: Schrauben Oberschale
- 8: Hebel
- 8a: Hebelanpressbolzen Fundamentrahmen
- 8b: Hebelanpressbolzen Gehäuserahmen
- 8c: Hebelbefestigung
- 9: Fangkäfig
- 10: Isolatormodul
- 11: Maschinengehäuse
- 12: Gehäuserahmen oder Gehäuseelemente
- 13: Gehäusestützen
- 14: Gehäuselängsträger
- 15: Fangeisen
- 16: Fundamentrahmenunterträger
- 17: Fundamentrahmenoberträger
- 18: Fundamentrahmenstrebe
- 19: Fangeiseneinlagefeder
- 20: Fangkäfigplatte
- 21: Maschinenlager
- 22: Maschinenwelle
- 23: Maschinenhaube oder Aufsatzkühler
- 24: Vorspannschraubenfeder
- 25: Vorspannschraubenfederbolzen
- 26: Vorspannschraubenfedermutter

## Patentansprüche

1. Isolatorsystem zur Körperschallentkopplung für eine große elektrische Maschine (1) für unterschiedliche Einsatzorte mittels Anordnung von schwingungsdämpfenden Elementen an einem Maschinengehäuse (11) und einem Fundament oder Grundrahmen (2),
wobei
am Maschinengehäuse (11) ein Gehäuserahmen oder mehrere Gehäuseelemente (12) angeordnet sind, sich der Gehäuserahmen oder die Gehäuseelemente (12) über mindestens ein Isolatormodul (10) pro Maschinenlängsseite auf einem Fundamentrahmen (2) elastisch abstützen,
jedes Isolatormodul (10) aus einer Parallelanordnung einer harten Tellerfeder (6) und einer weichen Vorspannschraubenfeder (24) besteht,
**dadurch gekennzeichnet, dass**
am Fundamentrahmen (2) ein oder mehrere Hebel (8) befestigt sind, wobei der bzw. die Hebel (8) sich gleichzeitig am Gehäuserahmen oder Gehäuseelementen (12) und optional am Fundamentrahmen (2) abstützen und Fangkäfige (9) zwischen Maschinengehäuse (11) und Fundamentrahmen (2) als Axialsicherung angeordnet sind.

2. Anordnung zur Körperschallentkopplung für eine große elektrische Maschine (1) nach Anspruch 1,
**dadurch gekennzeichnet,**
**dass** das Isolatormodul (10) aus mindestens einer Oberschale (4) einer oder mehreren zwischenliegenden harten Tellerfedern (6) und einer Unterschale (5) ausgebildet ist, wobei die Oberschale (4) mit einem Gehäuselängsträger (14) des Maschinengehäuses (11) mittels einer Schraube Oberschale (7b) und
die Unterschale (5) mit einem Grundrahmenoberträger (17) mittels einer Schraube Unterschale (7a) befestigt ist
und die Oberschale (4) über eine Vorspannschraubenfeder (24), welche auf einem Vorspannschraubenfederbolzen (25) geführt ist,
und mittels einer Vorspannschraubenfedermutter (26) auf den Grundrahmenoberträger vorspannbar angeordnet ist.

3. Anordnung zur Körperschallentkopplung für eine große elektrische Maschine (1) nach Anspruch 1 oder 2,
**dadurch gekennzeichnet,**
**dass** im Isolationsmodul (10) mehrere gleich große oder unterschiedlich große harte Tellerfedern (6) in Reihe oder parallel gestapelt oder verteilt angeordnet sind und diese in Parallelanordnung mit einer weichen Vorspannschraubenfeder (24) vorspannbar verbunden sind.

4. Anordnung zur Körperschallentkopplung für eine große elektrische Maschine (1) nach Anspruch 1,
**dadurch gekennzeichnet,**
**dass** die Fangkäfige (9) am Maschinengehäuse (11) mittels zusätzlicher Fangeisen (15) geführt sind und zwischen Fangeisen (15) und Fangkäfig (9) Fangeiseneinlagefedern (19) angeordnet sind.

5. Anordnung zur Körperschallentkopplung für eine große elektrische Maschine (1) nach Anspruch 1 oder 4,
**dadurch gekennzeichnet,**
**dass** die Fangkäfige (9) mittels einer zusätzlichen einteiligen oder mehrteiligen Fangkäfigplatte (20) auf dem Fundamentrahmen (2) angeordnet und befestigt sind.

6. Anordnung zur Körperschallentkopplung für eine große elektrische Maschine (1) nach Anspruch 1,
**dadurch gekennzeichnet,**
**dass** der bzw. die Hebel (8) so ausgebildet und angelenkt sind, dass vorrangig nur Querkräfte übertragen werden.

## Claims

1. An isolating system for decoupling structure-borne sound for a large electric machine (1) for various deployment sites, using an arrangement of vibration dampening elements on a machine housing (11) and on a foundation or baseframe (2),
wherein
a housing frame or several housing elements (12) are arranged on the machine housing (11), the housing frame or the housing elements (12) are elastically supported on a foundation frame (2) by means of at least one isolating module (10) per longitudinal side of the machine, each isolating module (10) consists of a parallel arrangement of a hard disc spring (6) and a soft helical bias spring (24),
**characterized in that**
one or several levers (8) are attached to the baseframe (2),
wherein the lever(s) (8) is(are) supportedconcurrently by the housing frame or housing elements (12) and optionally by the baseframe (2)
and catch cages (9) are arranged between the machine housing (11) and the foundation frame (2) as an axial securing means.

2. An arrangement for decoupling structure-borne sound for a large electric machine (1) according to claim 1,
**characterized in that**
the isolating module (10) is configured to include at least an upper shell (4), one or several interposed hard disc springs (6) and a lower shell (5),
wherein the upper shell (4) is fastened to a longitudinal housing girder (14) of the machine housing (11) by means of an upper shell bolt (7b) and
the lower shell (5) is fastened to a baseframe upper girder (17) by means of a lower shell bolt (7a),
and the upper shell (4) is arranged on the baseframe upper girder to be preloadableby means of a helical bias spring nut (26) through a helical bias spring (24) guided on a helical bias spring bolt (25).

3. The arrangement for decoupling structure-borne sound for a large electric machine (1) according to claim 1 or 2,
**characterized in that**
several hard spring discs (6) of the same size or of different sizes are stacked or distributed above each other or in parallel
and, in a parallel arrangement, these are joined with a soft helical bias spring (24).

4. The arrangement for decoupling structure-borne sound for a large electric machine (1) according to claim 1,
**characterized in that**
the catch cages (9) are guided on the machine housing (11) by means of additional iron catch pieces (15) and catch piece insert springs (19) are arranged between the iron catch piece (15) and the catch cage (9).

5. The arrangement for decoupling structure-borne sound for a large electric machine (1) according to claim 1 or 4,
**characterized in that**
the catch cages (9) are arranged on and secured to the foundation frame (2) by means of an additional one-piece or multi-piece catch cage plate (20).

6. An arrangement for decoupling structure-borne sound for a large electric machine (1) according to claim 1,
**characterized in that**
that the lever(s) (8) is/are configured and hinged such that primarily transversal forces are transmitted.

## Revendications

1. Système d'isolation pour le découplage du bruit solidien destiné pour une grande machine électrique (1) pour les sites d'utilisation divers et employant une disposition d'éléments antivibratoires sur un boîtier de machine (11) et un châssis de fondation ou de base (2),
un châssis de boîtier ou plusieurs éléments de boîtier (12) étant disposés sur le boîtier de machine (11),
le châssis de boîtier ou les éléments de boîtier (12) étant supportés de manière élastique sur un cadre de fondation (2) par au moins un module d'isolation (10) par côté longitudinal de la machine,
chaque module d'isolation (10) consistant en une disposition parallèle d'une rondelle ressort (6) dure et d'un ressort hélicoïdal de précontrainte (24) souple,
**caractérisé en ce que**
un ou plusieurs leviers (8) sont fixés au châssis de fondation (2),
le ou les leviers (8) s'appuyant à la fois sur le châssis de boîtier ou sur les éléments de boîtier (12) et, optionnellement, sur le châssis de fondation (2) et
des cages d'arrêt (9) étant disposées entre le boîtier de machine (11) et le châssis de fondation (2) en guise de blocage axial.

2. Dispositif pour le découplage du bruit solidien destiné pour une grande machine électrique (1) selon la revendication 1,
**caractérisé en ce que**
le module d'isolation (10) est configuré par au moins une coupelle supérieure (4), une ou plusieurs rondelles ressort (6) dures interposées et une coupelle inférieure (5),
la coupelle supérieure (4) étant fixée à un longeron de boîtier (14) du boîtier de machine (11) au moyen d'un boulon coupelle supérieure (7b) et
la coupelle inférieure (5) étant attachée à une poutre supérieure du châssis de base (17) au moyen d'un boulon coupelle inférieure (7a)
et la coupelle supérieure (4) étant disposée sur la poutre supérieure du châssis de base à être précontraignable au moyen d'un écrou du ressort hélicoïdal de précontrainte (26)via un ressort hélicoïdal de précontrainte (24) guidé sur un boulon de ressort (25).

3. Dispositif pour le découplage du bruit solidien destiné pour une grande machine électrique (1) selon la revendication 1 ou 2,
**caractérisé en ce que**,
dans le module d'isolation (10), plusieurs rondelles ressort (6) dures de la même taille ou d'une taille différente sont disposées empilées ou distribuées l'une sur l'autre ou en parallèle, et que
celles-ci sont couplées par un ressort hélicoïdal de précontrainte (24) en disposition parallèle d'une manière précontraignable.

4. Dispositif pour le découplage du bruit solidien destiné pour une grande machine électrique (1) selon la revendication 1,
**caractérisé en ce que**
les cages d'arrêt (9) sur le boîtier de machine (11) sont guidés au moyen de fers d'arrêt (15) additionnels et que des ressorts internes (19) des fers d'arrêt sont disposés entre les fers d'arrêt (15) et les cages d'arrêt (9).

5. Dispositif pour le découplage du bruit solidien destiné pour une grande machine électrique (1) selon la revendication 1 ou 4,
**caractérisé en ce que**
les cages d'arrêt (9) sont disposées et fixées sur le châssis de fondation (2) au moyen d'une plaque cage d'arrêt (20) monopartite ou pluripartite additionnelle.

6. Dispositif pour le découplage du bruit solidien destinée pour une grande machine électrique (1) selon la revendication 1,
**caractérisé en ce que**
le ou les leviers (8) sont configurés et articulés de telle manière que, primordialement, des forces transversales soient transmises.
